# EUROPEAN PATENT SPECIFICATION

(11) **EP 2 650 193 B1**
(45) Date of publication and mention of the grant of the patent: **02.03.2016**
(21) Application number: 11846818.0
(22) Date of filing: 23.08.2011
(51) Int. Cl.: B62D 9/02, B62K 5/06, B62K 5/10

(54) **REAR-SUSPENSION SYSTEM FOR THREE-WHEELED VEHICLES**
HINTERRADAUFHÄNGUNGSSYSTEM FÜR DREIRÄDRIGE FAHRZEUGE
SYSTÈME DE SUSPENSION ARRIÈRE POUR VÉHICULES À TROIS ROUES

(30) Priority: 07.12.2010 ES 201001542 P
(43) Date of publication of application: 16.10.2013
(73) Proprietor: Stilz Automotive Galicia, S.L., 36314 - Pontevedra (ES)
(72) Inventor: ALFONSO CORNES, Pablo Ramon, 36314 Vigo (ES) (ES)
(74) Representative: Pons Ariño, Angel
(86) International application number: PCT/ES2011/000265
(87) International publication number: WO 2012/076731

(56) References cited:
- EP-A1- 1 403 172
- EP-A1- 1 666 346
- WO-A2-02/44008
- ES-A2- 2 064 251
- FR-A1- 2 550 507
- FR-A1- 2 616 405
- FR-A1- 2 616 405
- JP-U- S5 693 311
- SG-A1- 126 786
- US-A- 5 116 069
- US-A1- 2010 072 721

## Description

### OBJECT OF THE INVENTION

The present invention relates to a rear suspension system for three-wheeled vehicles, particularly applicable to those vehicles with a front directional wheel and two rear wheels, of which one at least is a drive wheel.

The object of the invention is to establish a link between the two rear wheels, the link having two degrees of freedom, one regarded as a "pitching" and another considered a "rolling" in order to achieve increased stability of the vehicle itself when taking bends, as well as a greater traction and braking capacity in any traffic situation of the vehicle.

### BACKGROUND OF THE INVENTION

Three-wheeled vehicles currently on the market and even those disclosed in publications and / or patents, have as a shared feature a rear suspension system determined by elastic elements (springs, hydraulic and / or pneumatic cylinders tires and similar), individually associated to each wheel (not interfering with each other when, for example, the vehicle takes a bend or encounters along its path a pothole and / or a speed bump) or having an unequivocal rigid link between both wheels (without possible independent movement), so that stability in such situations is not the most optimal, not even in braking situations.

From the state of the art it is known document US2010072721 which is considered the closest prior art, and discloses the features of the preamble of claim 1. US2010072721 describes a three wheeled motorcycle in which the vertical axis of all three wheels remains parallel, capable of counter-steer and lean when making a turn. Incorporates differential assembly to allow difference in drive wheel speeds in a turn and the vertical movement of wheel is independent of other wheels. The rear body angle remains parallel with roadway surface, independent of wheel and front body angle.

### DESCRIPTION OF THE INVENTION

The proposed system presents innovation characteristics whereby it solves the problems and disadvantages of three-wheeled vehicles, in which the front wheel is directional and one or both rear wheels are drive wheels.

More specifically, the system of the invention is based on establishing a two-degree-of-freedom link between the rear wheels, i.e. a link allowing the rear wheel having two types of relative movement according to the situation of the vehicle itself at a given time.

Accordingly, for less energetic movements (low speed, turns, acceleration, braking, etc..) movements become uncoupled, i.e. independent, whereas for suspension movements at high speeds that can take place when passing over a pothole, speed bump, etc. the movements lose their independence, to gain impact absorbing capacity.
Structurally, the system comprises a pair of lateral arms pivotally connected at one end to the vehicle chassis, while the other opposite rear end of each arm is connected to the rotational shaft of the respective rear wheel.

Said two lateral arms and therefore the rear wheels are pivotally connected to a double rocker arm with a shared rotational shaft lying in the longitudinal plane of symmetry of the vehicle and at any angle with regard to the horizontal plane, so that between each rocker arm in the double rocker arm and the respective lateral arm, a pusher element is pivotally connected, through which the rocker arm itself is moved / displaced.

Furthermore, the two rocker arms mentioned corresponding to the double rocker arm are interlinked by a damping elastic device, such as a spring-damper assembly.

The two rocker arms of the said double rocker arm are linked together through an intermediate rocker arm so that the intermediate rocker arm has a central rotational shaft parallel to the rotational shaft of the double rocker arm, so that between the central area of such intermediate rocker arm and the vehicle chassis or structure itself, a spring-damper is mounted, whereas between the ends of said intermediate rocker arm and each of the rocker arms of the double rocker arm, corresponding pusher elements are pivotally mounted, all in a manner such that the rotational shaft of said intermediate rocker arm will always keep its orientation but with an upward and downward movement linked to the spring-damper.

This intermediate rocker arm may have a braking or locking device, which can be either manual or automatic and which at very low speeds, or no speed at all, prevents or hinders its rotation, thus preventing the rocker arm from rolling.

This intermediate rocker arm may also have a linear or rotary damper which in certain dynamic situations may partially or totally lock its rotational movement around its central axis, while its rotation is completely free in other dynamic situations.

According to these characteristics, each of the rear wheels of the vehicle has capacity for vertical upward or downward movements relative to the vehicle structure, guided through the independent lateral arms which are separate for each of the wheels, with a shared rotational shaft with the following arrangement:
1. Perpendicular to the longitudinal axis of the vehicle.
2. Parallel to the static horizontal reference plane (the ground).

Thus, the camber angle of each wheel is always identical to the roll angle, and wherein the roll centre of the rear axle is always at zero height above the ground (horizontal reference plane), and on the longitudinal axis of symmetry of the vehicle.

Therefore, the system of the invention provides a rolling motion (with zero resistance) and a pitching motion (resistance dependent on the elastic-damping device), with a coupling level which is dependent or sensitive to the energetic nature of the force to which it may be subjected, bearing in mind that the referred level of coupling extends from a situation of complete decoupling to a situation of partial coupling.

The invention configures a rear suspension system which when installed in a three-wheeled vehicle, having one front steering wheel and two rear wheels, it allows the vehicle to behave in such a way that it rolls on the bends, thereby achieving greater stability at bends, greater traction capacity and greater braking capacity. Furthermore, by locking the rolling motion when the vehicle has stopped or moves at a low speed, gives it total stability in these situations, which avoids the need to put one's foot on the ground as in bicycles, wheelers and conventional motorcycles, which in turn makes it possible to configure the vehicle with a wholly or partially closed frame.

The presence of the damper that varies the rotational movement freedom of the rocker arm is aimed at increasing stability in the event of wind or other similar situations with a high lateral component.

This shock absorber will offer zero or nearly free resistance to the rotation of the rocker arm in normal situations, whereby the system operates as described above.

In a situation of strong lateral wind or any similar situation causing a rolling motion at high speed, the shock absorber switches from offering zero resistance to a high resistance, so that the rolling movement of the vehicle switches from offering virtually zero to a high resistance, helping to maintain the trajectory in case of strong lateral winds for example.

In summary, the implementation of the suspension system of the invention enables vehicle configuration according to the following characteristics:
Three-wheeled vehicle, having one front steering wheel and two rear wheels (one or both being drive wheels) behaving like a conventional bicycle or motorcycle, with a natural rolling movement towards the interior of the curves, as there is no resistance to such movement.

Based on the mentioned rolling movement a greater natural stability is achieved in vehicles with a high ratio between the height of the centre of gravity and overall width, thereby achieving a narrow vehicle yet with a high stability by reducing its tendency to rollover.

Locking, or situation preventing the rolling situation at zero or near-zero speed, give the vehicle natural stability in a stationary position and at very low speeds, contrary to what happens with conventional bicycles or wheelers, thereby the driver does not need to put his or her foot down when the vehicle stops and thereby the vehicle frame can be totally or partially closed, whereby the occupants and / or the vehicle load are totally or partially protected from outdoor elements.

Possible inclusion of a system of vertical opening doors, which allows the vehicle to retain its dimensional advantage in width when parking, since a large space is not needed for the aforementioned door opening action.

Possible inclusion of a suspension system with a damping mechanism to vary the resistance to the rotation of the intermediate rocker arm from zero [in normal situations] to high [in the case of strong crosswinds or similar situations] allowing for a suspension system with variable rolling resistance going from zero or negligible, to high [dependent on the characteristic of said damper of the main spring-damping assembly of the system, and on the geometry of the assembly], thus providing a vehicle with improved stability against strong crosswinds for instance.

The arrangement of the suspension system in the three-wheeled vehicle, with an engine (which may be fuel or electric), and accessory systems, such as refrigeration, power, energy storage, etc..), centrally located in the vehicle, allows for two seats in tandem, with a cargo space between the two rear wheels, or one seat with an increased cargo area occupying the space between the two rear wheels and the second seat area.

In short, according to the foregoing a three-wheeled city vehicle will be defined, having one front steering wheel and two rear wheels, of which at least one of them is a drive wheel, with two passenger seats and a boot, or a one-seater vehicle with a high load volume, low occupied surface area due to its narrow width, so that the said reduced occupied surface area gives it manoeuvrability and easy parking, being totally stable when stationary and allowing partial or total closure of the frame, thereby protecting the occupants and cargo from the outdoor elements, whereby driver and passenger do not need to use specific clothing, not even a helmet.

### DESCRIPTION OF THE DRAWINGS

To complement the description made hereunder and for the sake of a better understanding of the characteristics of the invention according to a preferred practical embodiment thereof, a set of drawings is attached as an integral part of said description, the following figures are represented:
Figure 1 - Shows a representation corresponding to a general perspective view of the structure of a three-wheeled vehicle with a rear suspension system of the invention.
Figure 2. - Shows an isolated detail perspective view of the suspension system of the invention, with an intermediate rocker arm as a means of linking the double rocker arm that is part of the system.

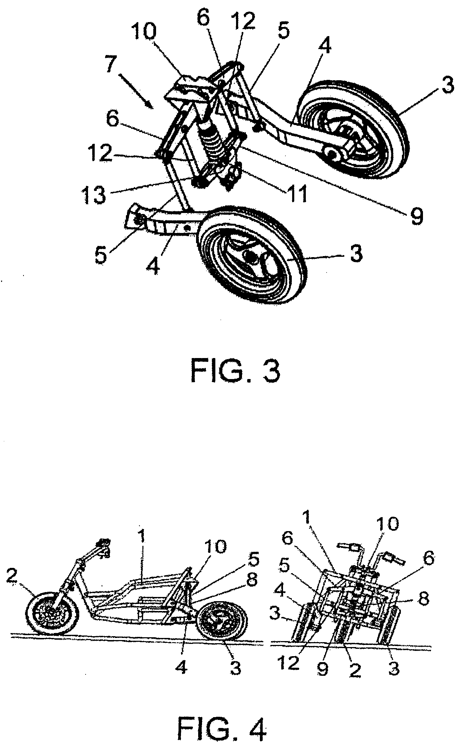

Figure 3. - Shows a perspective view of the system shown in Figure 2 with the brake device.
Figure 4. - Finally shows a side elevation view and a rear view side of the structure of a three-wheeled vehicle with the suspension system of the invention, where the structure of the vehicle can be seen in rightward rolling position.

### PREFERRED EMBODIMENT OF THE INVENTION

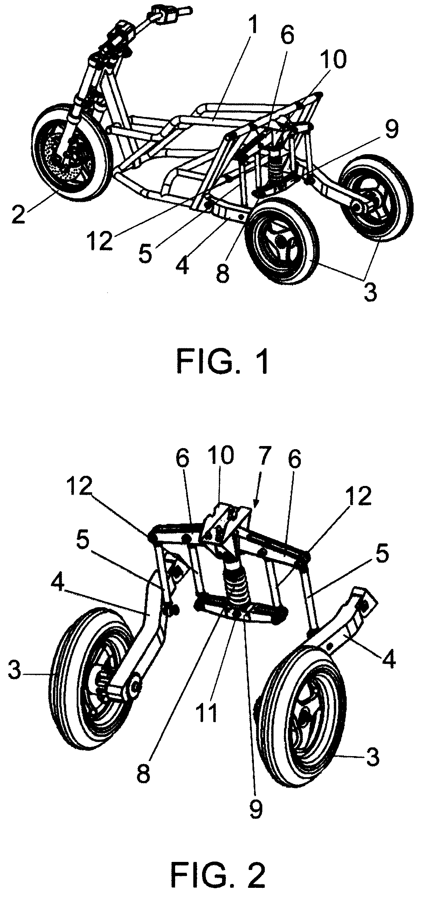

As can be seen in the figures, and specifically Figure 1 shows the structure of a three-wheeled vehicle (1), one wheel being a front directional wheel (2), and the remaining two being rear wheels (3), of which one or both are drive wheels.

The suspension system of the invention is applicable to the rear wheels (3) of the vehicle (1) in question, said system comprising a pair of lateral arms (4) one end of which is connected to the independent rotational shafts of the rear wheels (3), while the other end of said lateral arms (4) are pivotally connected to the vehicle structure (1), as seen in figure 1.

On the lateral arms (4) two pusher elements (5) are pivotally connected through one end thereof, while the other end is connected, in each case, with a rocker arm (6) corresponding to a double rocker arm (7).

The said joints may be constituted by simple ball joints or any other appropriate means.

The rocker arms (6) of the double rocker arm (7) have a shared rotational shaft in the longitudinal plane of symmetry of the concerned vehicle (1), with the particular feature whereby these two rocker arms (6) of the double rocker arm (7) are interconnected via an elastic-damping element (8), with an intermediate rocker arm (9), the elastic-damping element (8) being mounted between the intermediate rocker arm (9) and a fixing element (10) for attachment to the structure of the vehicle (1), as seen in Figures 1 and 2.

The intermediate rocker arm (9) includes a central rotational shaft (11) parallel to the rotational shaft of the double rocker arm (7), coinciding with one end of the elastic-damping element (8), while on the ends of the intermediate rocker (9) the pusher elements (12) are pivotally connected, and on its other end it is pivotally connected to the rocker arms (6) of the double rocker arm (7), joints implemented by means of ball joints or other appropriate elements.

On the other hand, it should be noted that said intermediate rocker arm (9) can be complemented with a braking or locking device (13), manually or automatically operated, consisting of a half-disc rigidly attached to such intermediate rocker arm (9) with its respective braking clamp anchored to the structure of the vehicle (1).

Under normal conditions, the intermediate rocker arm (9), relative to the structure of the vehicle (1), will always keep the same inclination as the roll angle, meaning that the intermediate rocker arm (9) during the rolling action maintains a static situation relative to the ground, and therefore the half-disc of the brake device, whereas the clamp of the braking device will accompany the chassis or structure of the vehicle (1) in its rolling motion.

What follows from the foregoing is that the itineration between the two braking elements (half-disc and brake device clamp) locks the rolling motion.

As described and according to the characteristics referred to the suspension system of the invention, operation is as follows:
Against a pitching motion (vertical load at height), the suspension offers resistance dependent on the rigidity of the elastic damping element (8). By subjecting the rear suspension to a vertical and symmetrical force, both rear wheels (3) receive an identical increase of load, which is transmitted through the pusher elements (5) linked to each lateral arm (4), to each of the double rocker arm parts (7). In turn, and through the pusher elements (12), the referred displacement is transmitted from the double rocker arm (7) to the intermediate rocker arm (9). Said intermediate rocker arm (9) given the symmetry of the loads in this situation does not undergo any rotation and tends to move vertically, without rotation, limited by the elastic and / or elastic-shock absorber assembly (8).

Therefore, in case of roll forces to the left for example and considering that the behaviour is identical in any rolling direction given the symmetry, the vehicle (1) will tend to rotate around its roll axis, which as mentioned above is coincident with the longitudinal axis of symmetry at ground level. In this case the left rear wheel will undergo a vertical upward displacement relative to the structure of the vehicle (1), a movement that makes the corresponding pusher transmit movement to the relevant rocker arm (6), which in turn will transmit a movement through the pusher element (12) to the intermediate rocker arm (9).

The rocker arms, i.e. both upper rocker arms (6) and the intermediate rocker arm (9), and because the vehicle (1) tends toward balance positions with minimal energy variations, the left suspension movement will be replicated by the right suspension, as this replica movement consumes less energy.

Both movements, i.e. roll and pitch, are completely decoupled, i.e. they are completely independent from the different inputs.

The operation just described is valid for rolling movements at low speed, including all turning and rolling manoeuvres of the vehicle, including those near the adhesion limit, so that in the event of finding an uneven ground, such as a pothole, or other high energy or speed input, the behaviour differs, since in these cases the minimum energy balance position of the vehicle (1) under these external dynamic conditions can take place with a combination of those described above such as the rolling and pitching movement, thus the suspension system has a certain degree of independence entailing improved comfort and active safety of the vehicle (1).

Therefore for suspension movements induced by high energy inputs, the suspension behaves with a certain degree of independence between both sides.

Furthermore, the device or connecting means of the two rocker arms (6) of the double rocker arm (7), has the locking or braking device (13) which can be operated automatically or manually, at very low speed or zero speed, increasing rigidity against rolling from a value of zero to a value dependent on the locking brake device itself, and ultimately on the damping element (8), so that the rolling movement action, the rotational shaft of the intermediate rocker arm (9) and one of the friction elements of the brake device (13) are rigidly attached to the chassis, without the interaction of these friction elements, the suspension behaves as described above, i.e. with the intermediate rocker arm (9) with two degrees of freedom, one corresponding to a rotation around the end of the elastic device and another corresponding to a linear movement guided by the elastic damping device, so that in any position of the mechanism it is possible to actuate the brake device (13), this being operational at any extension length of the suspension and at any roll angle.

In addition, the possibility of including a damping element (8) to avoid under certain conditions the free rotation of the rocker arm (9) with respect to its axis (11), to configure a suspension that can go from a rigidity against rolling of almost zero or zero, to a high rigidity which will improve vehicle response under conditions such as a strong crosswind for instance.

## Claims

1. Rear suspension system for three-wheeled vehicles (1), said vehicles (1) having a directional front wheel (2) and rear wheels (3), at least one of the rear wheels (3) being drive wheels, the system being applicable to the corresponding rear wheels (3) of the vehicle (1), the system comprising a double rocker arm (7) having two rocker arms (6) and a shared rotational shaft, said rotational shaft being parallel to the longitudinal symmetrical plane of the vehicle (1), one part of said double rocker arm (7) being connectable to the chassis of the vehicle (1),
and the system is **characterized in that** it further comprises:
- pusher elements (5) pivotally connected at the free ends of the two rocker arms (6),
- a pair of lateral arms (4), one first end of which is connected to the rotational shafts of the rear wheels (3), while a second end opposite to the first end is pivotally connectable to the chassis of the vehicle (1), wherein the lateral arms (4) are, at an intermediate point located between the first end and the second end, opposite to each other and pivotally connected to a respective pusher element (5), and
- an intermediate rocker arm (9) for interlinking the two rocker arms (6) of the double rocker arm (7).

2. Rear suspension system for three-wheeled vehicles (1) according to claim 1, wherein it further comprises:
- a central rotational shaft (11) located on the intermediate rocker arm (9), and being parallel to the longitudinal axis of the vehicle (1),
- an elastic damping element (8) having one end coincident at one end of the central rotational shaft (11);
- a connecting part (10) for being connected to the chassis of the vehicle (1), and connected to the free end of the damping element (8); and
- pusher elements (13) pivotally connected on one point located between the ends of the intermediate rocker arm (9), the pusher elements (13) being pivotally connected at their other end to the rocker arms (6) of the double rocker arm (7).

3. Rear suspension system for three-wheeled vehicles (1), according to any one of claims 1 and 2, comprising a brake device (13) manually or automatically operated, comprising:
- two friction elements consisting of a braking half-disc mounted on the intermediate rocker arm (9); and
- a clamp rigidly anchored to the chassis of the vehicle (1).

## Patentansprüche

1. Hinterradaufhängungssystem für dreirädrige Fahrzeuge (1), wobei diese Fahrzeuge (1) ein richtungsweisendes Vorderrad (2) und zwei Hinterräder (3) besitzen, wobei mindestens eines dieser Hinterräder (3) ein Antriebsrad ist und das System einen doppelten Kipphebel (2) mit zwei Kipphebeln (6) und einer gemeinsamen Drehwelle umfasst, wobei diese Drehwelle parallel zur symmetrischen Längsebene des Fahrzeugs (1) verläuft, wobei ein Teil dieses doppelten Kipphebels (7) mit der Karosserie des Fahrzeugs verbunden werden kann und das System **dadurch gekennzeichnet ist, dass** dieses weiterhin Folgendes umfasst:
- Schieberelemente (5), die schwenkbar mit den freien Enden der beiden Kipphebel (6) verbunden sind;
- ein Paar seitlicher Arme (4), von denen ein erstes Ende mit den Drehwellen der Hinterräder (3) verbunden ist, während ein zweites Ende gegenüber dem ersten Ende schwenkbar mit der Karosserie des Fahrzeugs (1) verbunden ist, wobei die seitlichen Arme (4) an einem Zwischenpunkt zwischen dem ersten Ende und dem zweiten Ende einander gegenüberliegen und schwenkbar mit einem entsprechenden Schieberelement (5) verbunden sind; und
- einen mittleren Kipphebel (9) zur Verbindung der beiden Kipphebel (6) des doppelten Kipphebels (7).

2. Hinterradaufhängungssystem für dreirädrige Fahrzeuge (1) nach Anspruch 1, das weiterhin Folgendes umfasst:
- eine zentrale Drehwelle (11), die sich an dem mittleren Kipphebel (9) befindet und parallel zur Längsachse des Fahrzeugs (1) angeordnet ist;
- ein elastisches Dämpfungsglied (8), dessen eines Ende mit dem einen Ende der zentralen Drehwelle (11) übereinstimmt;
- ein Verbindungsteil (10) zur Verbindung mit der Karosserie des Fahrzeugs (1) und mit dem freien Ende des Dämpfungsglieds (8); und
- Schieberelemente (13), die schwenkbar an einem Punkt zwischen den Enden des mittleren Kipphebels (9) verbunden sind, wobei die Schieberelemente (13) an deren anderem Ende schwenkbar mit den Kipphebeln (6) des doppelten Kipphebels (7) verbunden sind.

3. Hinterradaufhängungssystem für dreirädrige Fahrzeuge (1) nach einem der Ansprüche 1 und 2, das eine manuell oder automatisch betätigte Bremsvorrichtung (13) umfasst sowie:
- zwei Reibelemente, die aus einer am mittleren Kipphebel (9) montierten halben Bremsscheibe bestehen; und
- eine Klemme, die starr mit der Karosserie des Fahrzeugs (1) verankert ist.

## Revendications

1. Système de suspension arrière pour véhicules à trois roues (1), lesdits véhicules (1) possédant une roue avant directrice (2) et des roues arrière (3), au moins l'une des roues arrière (3) étant des roues motrices, le système étant applicable aux roues arrière correspondantes (3) du véhicule (1), le système comprenant un double culbuteur (7) possédant deux culbuteurs (6) et un arbre tournant commun, ledit arbre tournant étant parallèle au plan longitudinal symétrique du véhicule (1), une partie dudit double culbuteur (7) étant assemblable au châssis du véhicule (1),
et le système est **caractérisé en ce qu'**il comprend en outre :
- des éléments de poussage (5) assemblés de façon pivotante aux extrémités libres des deux culbuteurs (6),
- une paire de bras latéraux (4), dont une première extrémité est assemblée aux arbres tournants des roues arrière (3), tandis qu'une seconde extrémité opposée à la première extrémité est assemblable de façon pivotante au châssis du véhicule (1), où les bras latéraux (4) sont, en un point intermédiaire situé entre la première extrémité et la seconde extrémité, opposés l'un à l'autre et assemblés de façon pivotante à un élément de poussage respectif (5), et
- un culbuteur intermédiaire (9) pour relier les deux culbuteurs (6) du double culbuteur (7).

2. Système de suspension arrière pour véhicules à trois roues (1) selon la revendication 1, dans lequel sont compris en outre :
- un arbre tournant central (11) situé sur le culbuteur intermédiaire (9), et étant parallèle à l'axe longitudinal du véhicule (1);
- un élément amortisseur élastique (8) ayant une extrémité qui coïncide avec une extrémité de l'arbre tournant central (11);
- une pièce d'assemblage (10) destinée à être assemblée au châssis du véhicule (1), et assemblée à l'extrémité libre de l'élément amortisseur élastique (8) ; et
- des éléments de poussage (13) assemblés de façon pivotante en un point situé entre les extrémités du culbuteur intermédiaire (9), les éléments de poussage (13) étant assemblés de façon pivotante à leur autre extrémité aux culbuteurs (6) du double culbuteur (7).

3. Système de suspension arrière pour véhicules à trois roues (1), selon n'importe laquelle des revendications 1 et 2, comprenant un dispositif de frein (13) actionné manuellement ou automatiquement, comprenant :
- deux éléments de friction se composant d'un demi-disque de freinage monté sur le culbuteur intermédiaire (9) ; et
- un élément de serrage rigidement ancré au châssis du véhicule (1).
